# EUROPÄISCHE PATENTSCHRIFT

(11) **EP 1 549 973 B1**
(45) Veröffentlichungstag und Bekanntmachung des Hinweises auf die Patenterteilung: **05.08.2009**
(21) Anmeldenummer: 03714692.5
(22) Anmeldetag: 12.03.2003
(51) Int. Cl.: G01S 13/93

(54) **SENSORANORDNUNG UND VERFAHREN ZUR ABSTANDSREGELUNG BEI KRAFTFAHRZEUGEN**
SENSOR ARRANGEMENT AND METHOD FOR REGULATING THE DISTANCE OF MOTOR VEHICLES
SYSTEME DETECTEUR ET PROCEDE DE REGULATION DE L'ECARTEMENT DE VEHICULES AUTOMOBILES

(30) Priorität: 07.09.2002 DE 10241456
(43) Veröffentlichungstag der Anmeldung: 06.07.2005
(73) Patentinhaber: ROBERT BOSCH GMBH, 70442 Stuttgart (DE)
(72) Erfinder: BOECKER, Juergen, 70499 Stuttgart (DE); BRAEUCHLE, Goetz, 74934 Reichartshausen (DE)
(86) Internationale Anmeldenummer: PCT/DE2003/000783
(87) Internationale Veröffentlichungsnummer: WO 2004/027450

(56) Entgegenhaltungen:
- EP-A- 0 957 376
- DE-A- 4 412 770
- DE-A- 19 949 409
- US-A- 5 959 571

## Beschreibung

Stand der Technik

Die Erfindung betrifft eine Sensoranordnung an Kraftfahrzeugen, die zur Ortung von vor dem Fahrzeug befindlichen Objekten dient.

Kraftfahrzeuge sind häufig mit einem sogenannten ACC-System ausgerüstet, das eine Abstandsregelung bzw. eine adaptive Geschwindigkeitsregelung (Adaptive Cruise Control) ermöglicht. Zu diesem System gehört ein Abstandssensor, beispielsweise ein Radarsensor oder wahlweise auch ein Lidarsensor, mit dem die Abstände von vor dem Fahrzeug befindlichen Objekten gemessen werden können. Im Falle eines Radarsensors können auch die Relativgeschwindigkeiten direkt gemessen werden. Wenn der Sensor ein Zielobjekt, beispielsweise ein vorausfahrendes Fahrzeug erfasst, wird die Geschwindigkeit des eigenen Fahrzeugs automatisch so angepasst, dass das vorausfahrende Fahrzeug in einem angemessenen Sicherheitsabstand verfolgt wird. Wenn kein relevantes Zielobjekt erfasst wird, wird auf eine vom Fahrer gewählt Wunschgeschwindigkeit geregelt.

Bei herkömmlichen Systemen dieser Art ist ein einzelner Radarsensor, beispielsweise ein FMCW-Radar (Frequency Modulated Continuous Wave) mittig an der Frontpartie des Fahrzeugs angeordnet, so dass seine optische Achse mit der Längsmittelachse des Fahrzeugs zusammenfällt. Die Ortungstiefe des Sensors beträgt beispielsweise bis zu 200 m, und der Ortungswinkelbereich beträgt beispielsweise 7° zu jeder Seite der optischen Achse. Innerhalb dieses Ortungswinkelbereiches besitzt das Radarsystem eine gewisse Winkelauflösung, so dass anhand des gemessenen Ortungswinkels in Verbindung mit dem gemessenen Objektabstand entschieden werden kann, ob sich ein Objekt auf der von dem eigenen Fahrzeug befahrenen Fahrspur oder auf einer Nebenspur befindet. Die bekannten und im Einsatz befindlichen ACC-Systeme sind für Fahrten mit relativ hoher Reisegeschwindigkeit und entsprechend grossen Fahrzeugabständen auf Autobahnen und gut ausgebauten Landstrassen vorgesehen und arbeiten in diesem Einsatzbereich sehr zuverlässig. In Verkehrssituationen, in denen mit kleinerer Geschwindigkeit und entsprechend geringeren Fahrzeugabständen gefahren wird, tritt jedoch das Problem auf, dass beiderseits des Ortungswinkelbereiches des Radarsensors relativ grosse tote Winkel bestehen, da der Ortungsbereich des Radars erst ab einer Entfernung von etwa 8 bis 10 m die gesamte Fahrzeugbreite abdeckt. Bei sehr kleinen Fahrzeugabständen besteht deshalb die Gefahr, dass versetzt fahrende Fahrzeuge nicht mehr erkannt werden können oder plötzlich von der Seite her einscherende Fahrzeuge nicht rechtzeitig erkannt werden können.

Es wäre jedoch wünschenswert, den Einsatzbereich des Abstandsregelsystems auch auf kleinere Fahrzeugabstände auszudehnen, so dass beispielsweise eine sogenannte Stop & Go Regelung verwirklicht werden kann, die es beispielsweise im Staubetrieb gestattet, das eigene Fahrzeug automatisch bis in den Stand abzubremsen und, wenn das vorausfahrende Fahrzeug wieder anfährt, auch das erneute Anfahren des eigenen Fahrzeugs automatisch zu steuern. Dazu wird bisher eine zusätzliche Nahbereichssensorik benötigt. Beispielsweise beschreibt DE 199 49 409 eine Abstandssensorik mit zwei zusätzlichen abstandsauflösenden Nahbereichs-Radarsensoren, die rechts und links an der Stossstange des Fahrzeugs angebracht sind und bei relativ geringer Ortungstiefe einen Ortungswinkelbereich von 70° nach jeder Seite aufweisen. In dem relativ grossen Überlappungsbereich dieser Ortungswinkelbereiche kann dann der Azimutwinkel eines von beiden Sensoren erfassten Objektes durch Triangulation bestimmt werden. Für diese zusätzliche Nahbereichssensorik ist jedoch nicht nur ein hoher Installationsaufwand erforderlich, sondern es werden auch eine völlig neuartige Sensortechnologie und entsprechend angepasste Auswertungsalgorithmen benötigt.

Aus EP-A-0 957 376 ist eine Sensoranordnung nach dem Oberbegriff des Anspruchs 1 bekannt, bei der zwei lichtoptische Sender derart beiderseits der Längsmittelachse des Fahrzeugs angeordnet sind, dass ihre Lichtsrahlen ab einer ersten Distanz d1 zusammen die gesamte Fahrzeugbreite abdecken und einander ab einer zweiten Distanz d2 überlappen.

### Vorteile der Erfindung

Die erfindungsgemässe Sensoranordnung mit den in Anspruch 1 angegebenen Merkmalen bietet gegenüber herkömmlichen Sensoranordnungen mit nur einem einzigen langreichweitigen Radarsensor den Vorteil, dass eine beträchtliche Verkleinerung der toten Winkel beiderseits des Fahrzeugs mit herkömmlichen, bereits erprobten und bewährten Sensoren und mit vergleichsweise geringfügigen Modifikationen der Auswertungsalgorithmen erreicht werden kann. Weitere Vorteile bestehen darin, dass die Redundanz und damit die Zuverlässigkeit der Sensorik gesteigert wird und bestimmte Betriebsstörungen, beispielsweise durch Sensordejustage oder durch vorübergehende, durch Schneefall verursachte Erblindung eines Sensors, bei laufendem Betrieb wesentlich einfacher und zuverlässiger erkannt werden können.

Bei der erfindungsgemässen Sensoranordnung werden zwei herkömmliche Fernbereichs-Sensoren derart beiderseits der Längsmittelachse des Fahrzeugs angeordnet, dass ihre Ortungswinkelbereiche ab einer ersten Distanz d1, die weniger als 5m beträgt, zusammen die gesamte Fahrzeugbreite abdecken und einander ab einer zweiten Distanz d2, die weniger als 10 m beträgt, überlappen. Durch diese Anordnung können die toten Winkel rechts und links von den Ortungsbereichen wesentlich verkürzt werden, so dass sich beispielsweise eine Stop & Go Regelung ohne eine zusätzliche Nahbereichssensorik realisieren lässt, obwohl der Ortungswinkelbereich jedes einzelnen Sensors beispielsweise nur ±7° beträgt. Allerdings entsteht dann im Fall einer besonders kostengünstigen Lösung mit nur genau zwei Sensoren ein zusätzlicher toter Winkel vor der Fahrzeugmitte.

Dieser tote Winkel ist jedoch relativ klein, und der somit ohnehin sehr unwahrscheinliche Fall, dass ein schmales vorausfahrendes Fahrzeug, z.B. ein Zweirad, in diesem toten Winkel verschwindet, kann durch eine einfache Anpassung des Verfahrens zur Abstandsregelung berücksichtigt werden. Dabei macht man sich insbesondere den Umstand zunutze, dass ein Objekt nicht in diesen toten Winkel gelangen kann, ohne dass es vorher von zumindest einem der Sensoren erfasst worden ist.

Je weiter die beiden Sensoren von der Längsmittelachse des Fahrzeugs entfernt angeordnet sind, desto kleiner werden die beiden äußeren toten Winkel, und desto größer wird der tote Winkel vor der Fahrzeugmitte. Die genaue Lateralposition der Sensoren ist deshalb so zu wählen, daß ein vernünftiger Kompromiß erreicht wird. Bei Sensoren mit einem ortungswinkelbereich von ±7° läßt sich die Anordnung der Sensoren beispielsweise so wählen, daß die Distanz d1, von der ab die beiden Ortungswinkelbereiche zusammen die gesamte Fahrzeugbreite abdecken, nur noch 3 m beträgt und die Distanz d2, ab der sich die Ortungswinkelbereiche überlappen, 5 m beträgt. Der laterale Abstand zwischen den beiden Sensoren beträgt dann etwa 1,2 m, so daß in den toten Winkel vor der Fahrzeugmitte ohnehin nur Objekte gelangen können, deren Breite kleiner ist als dieser Wert. Bei diesen Objekten kann es sich generell nur um Zweiräder handeln. In der Praxis ergibt sich eine weitere virtuelle Verkürzung des toten Winkels dadurch, daß Zweiräder im Gegensatz zu Pkw stark strukturiert sind, so daß die Radarwellen auch an Strukturen im vorderen Bereich des Fahrzeugs reflektiert werden, beispielsweise am vorderen Schutzblech oder an der Gabel. Insbesondere dann, wenn das Zweirad seitlich gegenüber der optischen Achse des Sensors versetzt ist, kann das Zweirad folglich auch anhand dieser vorderen Reflexionszentren geortet werden.

Vorteilhafte Ausgestaltungen und Weiterbildungen der Erfindung sind in den abhängigen Ansprüchen angegeben.

Die beiden Radarsensoren sind vorzugsweise so angeordnet, daß ihre optischen Achsen parallel zur Längsmittelachse des Fahrzeugs verlaufen. Wahlweise ist jedoch auch eine Anordnung denkbar, bei der die optischen Achsen nach außen divergieren, so daß die äußeren toten Winkel weiter verkleinert werden.

Für den extremen Nahbereich, beispielsweise unterhalb von 3 m, kann zur Objekterfassung ergänzend auch auf handelsübliche Einparkhilfesensoren wie z.B. Ultraschallsensoren zurückgegriffen werden.

Im normalen Abstandsbereich, beispielsweise bei Abständen von 10 m oder mehr, werden Objekte auf der eigenen Fahrspur bei der erfindungsgemäßen Anordnung von beiden Sensoren detektiert. Daraus ergibt sich die Möglichkeit, die von den Sensoren gemessenen Abstands- und Winkeldaten durch Triangulation auf ihre Konsistenz zu überprüfen, so daß z.B. Fehler in der Winkeljustage eines oder beider Sensoren leicht erkannt und ggf, automatisch bei der Signalauswertung korrigiert werden können. Ebenso ist ein Ausfall oder eine Erblindung eines der Sensoren sofort erkennbar.

Da tote Winkel nur bei sehr kleinen Abständen, beispielsweise unterhalb von 5 m auftreten und andererseits Fahrzeugabstände in dieser Größenordnung nur bei sehr kleinen Fahrgeschwindigkeiten zu erwarten sind, kann die Situation, daß ein vorausfahrendes Fahrzeug in dem toten Winkel vor der Fahrzeugmitte verschwindet, einfach und ohne Gefährdung des Nachfolgeverkehrs dadurch beherrscht werden, daß das eigene Fahrzeug verzögert wird. Infolge dieser Verzögerung sollte die Relativgeschwindigkeit des vorausfahrenden Fahrzeugs wieder zunehmen, so daß es den toten Winkel wieder verläßt. Wenn dies nicht geschieht, beispielsweise weil das vorausfahrende Fahrzeug seinerseits verzögert oder anhält, wird das eigene Fahrzeug weiter verzögert und schließlich bis in den Stand gebremst.

Die Unterscheidung, ob das vorausfahrende Fahrzeug im toten Winkel vor der Fahrzeugmitte verschwunden ist oder aber nach links oder rechts abgebogen ist, kann bei Verwendung winkelauflösender Abstandssensoren problemlos getroffen werden. Alternativ oder zusätzlich - etwa zu Prüfzwecken - kann diese Unterscheidung jedoch auch anhand einer Extrapolation der zuvor erfaßten Relativbewegung des Objektes getroffen werden. In jedem Fall genügt für eine verläßliche Unterscheidung eine relativ grobe Winkelauflösung der Radarsensoren, da nur entschieden zu werden braucht, nach welcher Seite das Objekt den Ortungsbereich des betreffenden Sensors verlassen hat.

### Zeichnung

Ein Ausführungsbeispiel der Erfindung ist in der Zeichnung dargestellt und in der nachfolgenden Beschreibung näher

erläutert.Es zeigen:
- Fig. 1: ein Diagramm eines Kraftfahrzeugs einschließlich der erfindungsgemäßen Sensoranordnung und der zugehörigen Ortungsbereiche; und
- Fig. 2(A) und 2B): ein Ablaufdiagramm für ein Verfahren zur Abstandsregelung.

### Beschreibung des Ausführungsbeispiels

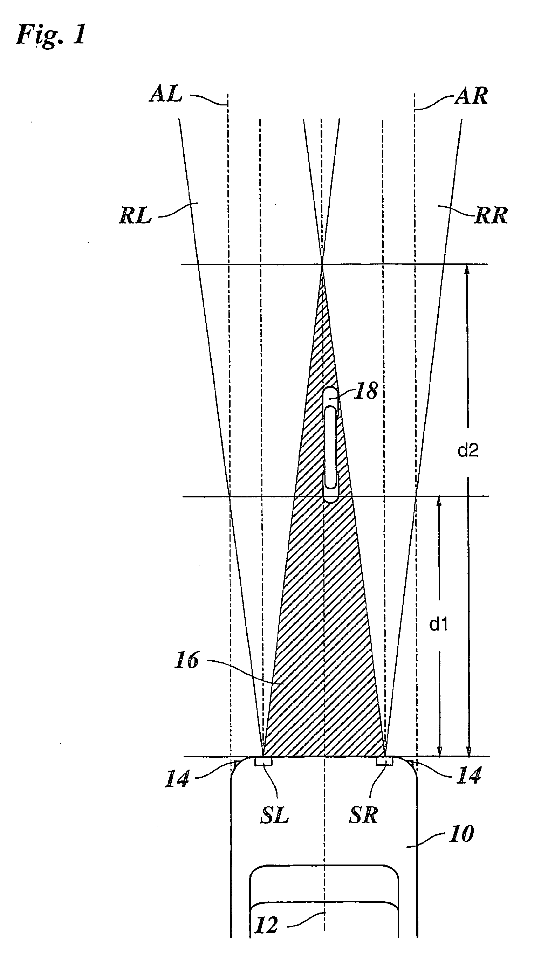

In Fig. 1 ist am unteren Rand die Frontpartie eines Fahrzeugs 10 dargestellt, bei dem im Bereich der vorderen Stoßstange eine Sensoranordnung vorgesehen ist, die aus zwei symmetrisch zur Längsmittelachse 12 des Fahrzeugs angeordneten Sensoren SR und SL besteht. Bei diesen Sensoren handelt es sich beispielsweise um winkelauflösende FMCW-Radarsensoren, die die Abstände und Relativgeschwindigkeiten von Objekten in einem Abstandsbereich zwischen 3 m und etwa 200 m erfassen können. Der extreme Nahbereich unterhalb von 3 m wird durch zusätzliche Einparkhilfesensoren 14 abgedeckt. Jeder der beiden Sensoren SR und SL hat einen Ortungswinkelbereich RR bzw. RL von ±7°. Die optischen Achsen AR und AL der beiden Sensoren verlaufen parallel zur Längsmittelachse 12 des Fahrzeugs. Der Lateralversatz der Sensoren SR und SL gegenüber der Längsmittelachse 12 des Fahrzeugs 10 beträgt etwa 60 cm. Bei einer typischen Fahrzeugbreite von 2 m bedeutet dies, daß die beiden Ortungswinkelbereiche RR und RL zusammen schon ab einer Distanz d1 von etwa 3 m die gesamte Fahrzeugbreite abdecken. Auch Fahrzeuge, die sehr eng von der Seite her vor dem Fahrzeug 10 einscheren, können daher frühzeitig erkannt werden.

In der Mitte vor dem Kraftfahrzeug 10 überlappen die beiden Ortungsbereiche RR und RL einander ab einer Distanz d2 von etwa 5 m. Vor der Fahrzeugmitte entsteht somit zwischen den beiden Ortungswinkelbereichen ein toter Winkel 16, der in der Zeichnung schraffiert dargestellt ist und die Form eines gleichschenkligen Dreiecks mit einer Basisbreite von nur 1,2 m hat. Das bedeutet, daß ein Objekt 18, z.B. ein vorausfahrendse Fahrzeug oder ein sonstiges Hindernis nur dann vollständig in den toten Winkel gelangen kann, wenn sein Abstand zum Fahrzeug 10, genauer, der Abstand zwischen der Basislinie der Sensoren SL, SR und dem vordersten erfaßbaren Reflexionszentrum des Objekts weniger als 5 m beträgt und wenn außerdem die Gesamtbreite des Objektes höchstens 1,2 m beträgt. In der Praxis kann es sich bei einem solchen Objekt also allenfalls um ein Zweirad handeln, wie in der Zeichnung dargestellt ist.

Sobald sich das Objekt 18 aus der in der Zeichnung dargestellten Position etwas nach rechts bewegt, wird es von dem Sensor SR erfaßt. Ebenso wird es von diesem Sensor erfaßt, wenn der Abstand zwischen dem Objekt 18 und dem Fahrzeug 10 geringfügig zunimmt. Bewegt sich das Objekt 18 um eine etwas größere Strecke nach links, wird es von dem Sensor SL erfaßt. Da der tote Winkel 16 vollständig von den Ortungswinkelbereichen RR und RL und dem Fahrzeug 10 umrahmt wird, kann das Objekt 18 den toten Winkel 16 nicht verlassen, ohne von einem der Sensoren erfaßt zu werden. Umgekehrt kann kein Zielobjekt in diesen toten Winkel gelangen, ohne daß es zuvor von mindestens einem der Sensoren SR, SL erfaßt wurde.

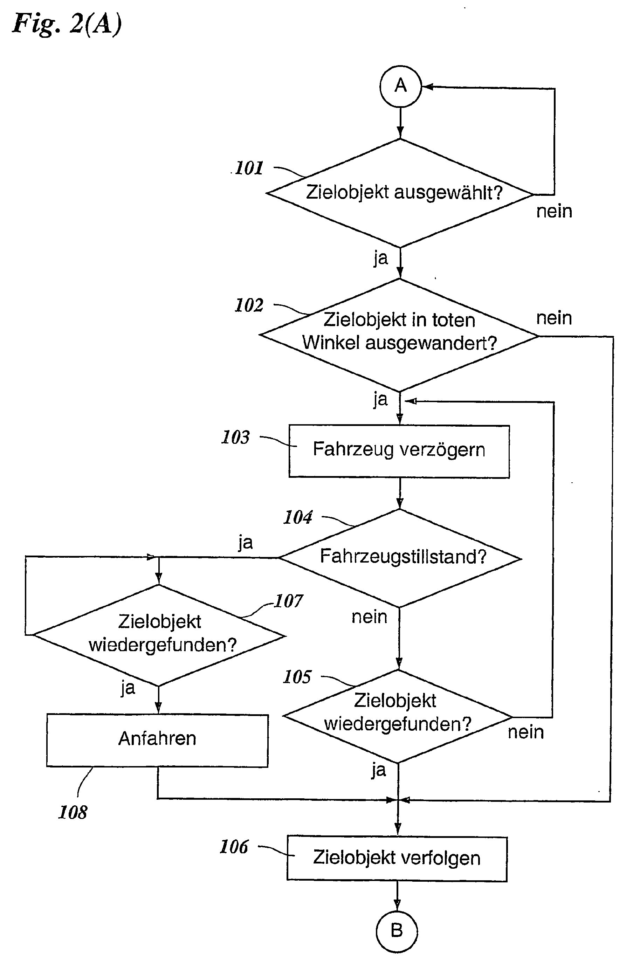

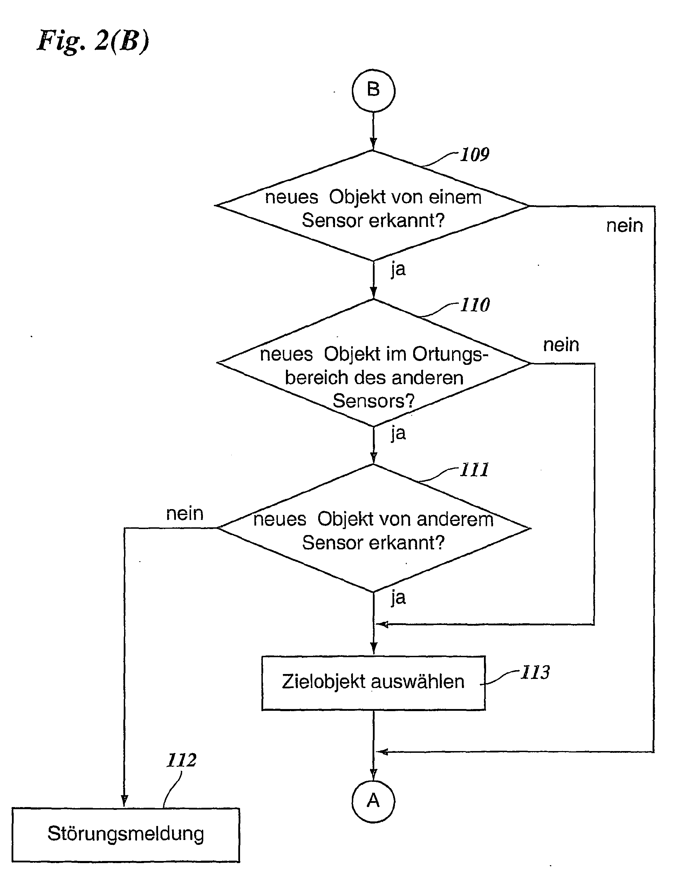

Mit Hilfe der beschriebenen Sensoranordnung ist es deshalb möglich, ein Abstandsregelverfahren durchzuführen, bei dem ein ausgewähltes Zielobjekt auch dann sicher verfolgt werden kann, wenn sein Abstand zum eigenen Fahrzeug nur in der Größenordnung von etwa 5 m liegt, und bei dem das Fahrzeug 10 automatisch in den Stand gebremst wird, wenn das verfolgte Zielobjekt seinerseits anhält. Die wesentlichen Schritte dieses Verfahrens sind in Figuren 2(A) und 2(B) in einem Flußdiagramm dargestellt.

Dieses Flußdiagramm illustriert eine Prozedur, die am Punkt A in Figur 2(A) beginnt und dann zyklisch durchlaufen wird. Dabei wird davon ausgegangen, daß die Ortungsdaten der Sensoren SR und SL zyklisch erfaßt werden und daß die erfaßten Objekte von Zyklus zu Zyklus identifiziert und verfolgt werden (Trackig) und daß das jeweils das dem Fahrzeug 10 am nächsten gelegene Objekt auf der eigenen Fahrspur als Zielobjekt ausgewählt wird. In Schritt 101 wird geprüft, ob ein Zielobjekt vorhanden ist. Wenn dies nicht der Fall ist, erfolgt ein Rücksprung zu dem Punkt A. Andernfalls wird in Schritt 102 geprüft, ob das ausgewählte Zielobjekt in den toten Winkel 16 ausgewandert ist. In diesem Fall wird in Schritt 103 das eigene Fahrzeug verzögert, damit das Zielobjekt wieder in den Erfassungsbereich gelangt. In Schritt 104 wird dann geprüft, ob infolge der Fahrzeugverzögerung schon der Fahrzeugstillstand eingetreten ist. Ist dies nicht der Fall, wird in Schritt 105 geprüft, ob das Zielobjekt wiedergefunden wurde. Wenn ja, wird in Schritt 106 dieses Zielobjekt verfolgt. Wurde das Zielobjekt nicht wiedergefunden, erfolgt ein Rücksprung zu Schritt 103, und das Fahrzeug wird weiter verzögert. Wenn sich bei der Prüfung in Schritt 104 zeigt, daß das Fahrzeug in den Stand gebremst wurde, so wird in Schritt 107 geprüft, ob das Zielobjekt wiedergefunden wurde, beispielsweise weil sich das Zielobjekt wieder in Bewegung gesetzt und den toten Winkel verlassen hat. Dieser Schritt 107 wird ggf. so lange wiederholt, bis das Zielobjekt wieder aufgetaucht ist. Wenn das Zielobjekt wiedergefunden wurde, wird in Schritt 108 eine Anfahrprozedur ausgelöst, und danach wird mit Schritt 106 fortgefahren, um das Zielojekt zu verfolgen.

Anschließend wird die Routine am Punkt B in Figur 2(B) fortgesetzt. In Schritt 109 wird geprüft, ob ein neues Objekt, beispielsweise ein von der Seite her einscherendes Fahrzeug, in den Ortungsbereich der Sensoren eingewandert ist. Ist dies der Fall, so wird in Schritt 110 anhand der Ortungsdaten für dieses Objekt geprüft, ob es sich auch im Ortungsbereich des anderen Sensors befindet. In diesem Fall wird in Schritt 111 geprüft, ob das neue Objekt auch von dem anderen Sensor erkannt wurde. Ist dies nicht der Fall, so deutet dies auf einen Fehler in der Sensorik hin, und es wird in Schritt 112 eine Störungsmeldung ausgegeben.

Wenn in Schritt 111 festgestellt wurde, daß das neue Objekt auch von dem anderen Sensor erkannt worden ist, oder wenn in Schritt 110 festgestellt wurde, daß das neue Objekt nicht von dem anderen Sensor erkannt werden konnte, so wird in Schritt 113 eine neue Zielobjektauswahl durchgeführt, d.h., es wird entschieden, ob das neu aufgetauchte Objekt das bisherige Zielobjekt ersetzt. Danach erfolgt ein Rücksprung zu dem Punkt A. Wenn in Schritt 109 festgestellt wurde, daß kein neues Objekt aufgetaucht ist, wird direkt zum Punkt A verzweigt.

Eine den Schritten 110 bis 113 analoge Prozedur wird auch im Rahmen des Objekttracking für jedes verfolgte Objekt ausgeführt, obgleich dies in der Zeichnung nich dargestellt ist.

## Patentansprüche

1. Sensoranordnung an Kraftfahrzeugen, zur Ortung von vor dem Fahrzeug (10) befindlichen Objekten (18), mit mindestens zwei Sensoren (SR, SL), die jeweils eine Ortungstiefe von mindestens 50 m haben und derart beiderseits der Längsmittelachse (12) des Fahrzeugs angeordnet sind, dass ihre Ortungswinkelbereiche (RR, RL) ab einer ersten Distanz d1 zusammen die gesamte Fahrzeugbreite abdecken und einander ab einer zweiten Distanz d2 überlappen, **dadurch gekennzeichnet, dass** die beiden Sensoren (SR, SL) winkelauflösende Radarsensoren sind, die jeweils für sich in der Lage sind, den Ortungswinkel des Objekts zu messen, und dass die erste Distanz d1 weniger als 5 m beträgt und die zweite Distanz d2 weniger als 10 m beträgt.

2. Sensoranordnung nach Anspruch 1, **dadurch gekennzeichnet, dass** die erste Distanz d1 etwa 3 m beträgt.

3. Sensoranordnung nach Anspruch 1 oder 2, **dadurch gekennzeichnet, dass** die zweite Distanz d2 etwa 5 m beträgt.

4. Sensoranordnung nach einem der vorstehenden Ansprüche, **dadurch gekennzeichnet, dass** die optischen Achsen (AR, AL) der beiden Sensoren (SR, SL) parallel zur Längsmittelachse (12) des Fahrzeugs (10) verlaufen.

5. Sensoranordnung nach einem der vorstehenden Ansprüche, **dadurch gekennzeichnet, dass** der Ortungswinkelbereich (RR, RL) jedes der Sensoren (SR, SL) nach jeder Seite der optischen Achse (AR, AL) des betreffenden Sensors weniger als 10° beträgt.

## Claims

1. Sensor arrangement on motor vehicles, for determining the location of objects (18) which are located in front of the vehicle (10), having at least two sensors (SR, SL) which each have a location-determining depth of at least 50 m and are arranged on each side of the longitudinal centre axis (12) of the vehicle in such a way that their location-determining angle ranges (RR, RL) together cover the entire width of the vehicle starting from a first distance d1 and overlap one another starting from a second distance d2, **characterized in that** the two sensors (SR, SL) are angle-resolving radar sensors which are each capable of measuring the location-determining angle of the object, and **in that** the first distance d1 is less than 5 m, and the second distance d2 is less than 10 m.

2. Sensor arrangement according to Claim 1,
**characterized in that** the first distance d1 is approximately 3 m.

3. Sensor arrangement according to Claim 1 or 2, **characterized in that** the second distance d2 is approximately 5 m.

4. Sensor arrangement according to one of the preceding claims, **characterized in that** the optical axes (AR, AL) of the two sensors (SR, SL) run parallel to the longitudinal centre axis (12) of the vehicle (10).

5. Sensor arrangement according to one of the preceding claims, **characterized in that** the location-determining angle range (RR, RL) of each of the sensors (SR, SL) is less than 10° on each side of the optical axis (AR, AL) of the respective sensor.

## Revendications

1. Système de détecteurs pour véhicules automobiles, destiné à localiser des objets (18) situés en avant du véhicule (10) et présentant au moins deux détecteurs (SR, SL) qui ont chacun une portée de localisation d'au moins 50 m et qui sont disposés sur les côtés respectifs de l'axe longitudinal central (12) du véhicule de telle sorte que leurs plages angulaires de localisation (RR, RL) couvrent ensemble la totalité de la largeur du véhicule à partir d'une première distance d1 et se superposent mutuellement à partir d'une deuxième distance d2,
**caractérisé en ce que** les deux détecteurs (SR, SL) sont des détecteurs radar à résolution angulaire qui sont tous deux en mesure de mesurer l'angle de gisement de l'objet et **en ce que** la première distance d1 est inférieure à 5 m et la deuxième distance d2 est inférieure à 10 m.

2. Système de détecteurs selon la revendication 1, **caractérisé en ce que** la première distance d1 est d'environ 3 m.

3. Système de détecteurs selon les revendications 1 ou 2, **caractérisé en ce que** la deuxième distance d2 est d'environ 5 m.

4. Système de détecteurs selon l'une des revendications précédentes, **caractérisé en ce que** les axes optiques (AR, AL) des deux détecteurs (SR, SL) s'étendent parallèlement à l'axe longitudinal central (12) du véhicule (10).

5. Système de détecteurs selon l'une des revendications précédentes, **caractérisé en ce que** la plage angulaire de localisation (RR, RL) de chacun des détecteurs (SR, SL) de chaque côté de l'axe optique (AR, AL) du détecteur concerné est inférieure à 10°.
